# EUROPEAN PATENT SPECIFICATION

(11) **EP 2 217 531 B1**
(45) Date of publication and mention of the grant of the patent: **10.05.2017**
(21) Application number: 08858792.8
(22) Date of filing: 20.11.2008
(51) Int. Cl.: C01B 33/141

(54) **PROCESS FOR PREPARING SILICON DIOXIDE DISPERSIONS**
VERFAHREN ZUR HERSTELLUNG VON SILICIUMDIOXIDDISPERSIONEN
PROCÉDÉ DE PRÉPARATION DE DISPERSIONS DE DIOXYDE DE SILICIUM

(30) Priority: 12.12.2007 DE 102007059861
(43) Date of publication of application: 18.08.2010
(73) Proprietor: Evonik Degussa GmbH, 45128 Essen (DE)
(72) Inventor: LORTZ, Wolfgang, 63607 Wächtersbach (DE); WILL, Werner, 63571 Gelnhausen (DE); REITZ, Sascha, 63456 Hanau (DE); PERLET, Gabriele, 63538 Grosskrotzenburg (DE)
(86) International application number: PCT/EP2008/065917
(87) International publication number: WO 2009/074440

(56) References cited:
- EP-A1- 0 876 841
- WO-A1-2006/052019
- DATABASE WPI Week 200412 Thomson Scientific, London, GB; AN 2004-112477 XP002566824 & JP 2003 176123 A (TOKUYAMA CORP) 24 June 2003 (2003-06-24)

## Description

The invention relates to a process for preparing a dispersion of silicon dioxide. The invention relates more particularly to a process for preparing stable, highly filled dispersions of high-surface-area silicon dioxides.

Silicon dioxide dispersions are known. They are used, for example, in polishing processes (chemical-mechanical polishing), in the paper industry for producing a paper coating slip, or in the glass industry for producing shaped glass articles.

The invention disclosed in US 5,246,624 has the underlying principle of maximizing the destructuring of the fumed (pyrogenic) silicon dioxide powder in the acid pH range by the action of high shearing energies in a system that has a high viscosity within this pH range. Although it is also disclosed that the process can be used for all fumed silicon dioxides, it has nevertheless emerged that only silicon dioxide powders having BET surface areas of less than 75 m²/g yield stable dispersions. Stable dispersions of silicon dioxide powders with higher BET surface areas are not obtainable by US 5,264,624.

EP-A-773270 discloses how dispersions of silicon dioxide with relatively high BET surface areas can be obtained by high-pressure milling. Two streams of a preliminary dispersion that are under high pressure undergo collision, as a result of which the particles undergo self-milling. By this means it is said to be possible to obtain dispersions of silicon dioxide having a BET surface area of 90 to > 500 m²/g and a silicon dioxide content of up to 40% by weight. Alkaline dispersions are obtained by adding an appropriate amount of a basic compound to the preliminary dispersion prior to high-energy milling. Milling thus takes place in the presence of the basic compound. Advice is given against milling in the acidic range, on the grounds that the dispersion undergoes gelling after just a short time. Experiments have also shown that stable, alkaline dispersions with a degree of filling of up to 40% by weight cannot be obtained with high-surface-area silicon dioxide powders. The working examples only specify dispersions having a silicon dioxide content of 10% and 12% by weight. EP-A-876841 describes production methods for aqueous dispersion of inorganic particles such as pyrogenic silica which have improved stability. This is achieved by the use of high-pressure homogenizer. A process has now been found, surprisingly, for preparing alkaline silicon dioxide dispersions that does not exhibit the disadvantages of the prior art. More particularly this process is suitable for producing low-viscosity, highly filled dispersions of high-surface-area silicon dioxide powder.

The invention provides a process for preparing an alkaline dispersion of aggregated silicon dioxide particles by dividing a preliminary dispersion comprising 20% to 35% by weight of aggregated silicon dioxide particles having a BET surface area of 120 to 300 m²/g, within a pH of 3 to 5 into at least two streams, placing these streams under a pressure of at least 50 bar and depressurizing them to a collision point, each via one nozzle, in a grinding chamber, and admixing the dispersion that runs off at the bottom, with an alkaline substance in an amount such that the dispersion overall has a pH of more than 7, wherein the preliminary dispersion is sprayed using three nozzles disposed in one plane at an angle of 120° to one another and the alkaline substance is introduced by means of a nozzle located above the collision point while the dispersion is still in the grinding chamber.

By a preliminary dispersion is meant a dispersion produced by means of dispersing assemblies which produce a lower energy input than those by means of which at least two streams of a preliminary dispersion are divided, are placed under a pressure of at least 50 bar and are depressurized to a collision point each via one nozzle. Preliminary dispersing is commonly carried out using stirrers or dissolvers. The preliminary dispersing operation is intended merely to provide a medium for the subsequent dispersion proper. The preliminary dispersion is not subject to any conditions relating to stability or viscosity. The average diameter of the particles in the preliminary dispersion is commonly 5 to 50 µm.

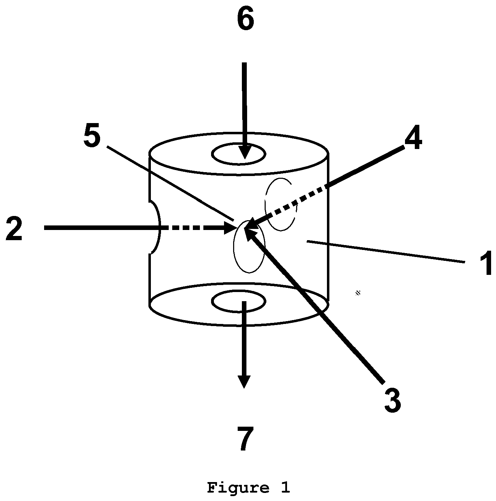

Figure 1 shows this embodiment diagrammatically, where: 1 = milling chamber; 2, 3, 4 = jets of the preliminary dispersion, 5 = collision point, 6 = alkaline substance, 7 = dispersion running down.

The process of the invention is configured such that the pH of the preliminary dispersion is situated in the acidic range, specifically from 3 to 5. This pH may automatically establish itself when the silicon dioxide powder is subjected to preliminary dispersion, such as when employing pyrogenically prepared silicon dioxide particles using chloride-containing starting materials. If the pH is outside the range from 3 to 5, it can be brought to values with said range by addition of acids or bases. Generally speaking, acids are needed in order to set the pH. These acids may be inorganic acids, such as hydrochloric acid, sulphuric acid or nitric acid, for example, or organic acids such as monocarboxylic acids, dicarboxylic acids or hydroxycarboxylic acids; acetic acid may be mentioned more particularly. Acids and bases ought to be soluble in the preliminary dispersion.

The pH of the dispersion which is obtained by the introduction of an alkaline substance is more than 7. The alkaline substance is preferably metered in amounts such that the pH of the dispersion is 8 to 11. The amount required is governed by the pH of the preliminary dispersion.

The alkaline substance may be introduced, for example, by means of a gear pump, membrane pump, eccentric screw pump or piston pump.

The alkaline substance may preferably be at least one base selected from the group encompassing the metal hydroxides of main groups I and II of the Periodic Table of the Elements, more particularly NaOH, KOH and NH₄(OH), amines and amine derivatives, such as NH₂R, NHR₂, NR₃ and NR₄⁺OH⁻ with R = Me, Et, Pr or Bu, where R may be alike or different, amino alcohols, such as aminopropanols, and alkaline salts of organic and inorganic acids.

The alkaline substance may be introduced as a liquid, as a solution or in gas form. Preferably it is used as a solution. In that case it has a base concentration of preferably 2.5% to 50% by weight and more preferably 5% to 25% by weight, based on the solution.

The liquid phase of the preliminary dispersion may encompass not only water but also mixtures of water with organic solvents. Where mixtures are used it should be ensured that water and organic solvent form only one phase and the fraction of water is sufficiently high to allow the determination of a pH. The solution of the alkaline substance may also include fractions of an organic solvent.

The amount of the aggregated silicon dioxide particles used in the process of the invention is 20% to 35% by weight, based on the preliminary dispersion. The amount of aggregated silicon dioxide particles in the dispersion will be below the amount in the preliminary dispersion, owing to the alkaline substance introduced. The extent to which the amount in the dispersion is lower is dependent on the concentration of the base.

The aggregated silicon dioxide particles used have a BET surface area of 120 to 300 m²/g, preferably one of 180 to 240 m²/g.

The nature of the aggregated silicon dioxide particles used is not subject to any restriction. With preference it is possible to use those of pyrogenic origin. Pyrogenic (fumed) silicon dioxide powders are prepared preferably by flame hydrolysis. In that process a silicon compound in vapour form, generally silicon tetrachloride, is burnt with hydrogen and oxygen. In a first step, hydrogen and oxygen react to form water, which in a second step hydrolyses the silicon compound to form fumed silicon dioxide. In this process, primary particles are formed first of all, which in the further course of reaction may grow together to form aggregates. Aggregates are fused primary particles. The aggregates may congregate further to further agglomerates. When fumed silicon dioxide is dispersed, first of all, under the action of low dispersing energy, the agglomerates are separated. Suitable aggregated silicon dioxide powders are more particularly HDK® N20, Wacker; Aerosil® 200, Degussa; and Fumed Silica M-5®, M-5P®, M-5DP®, M-7D®, PTG® and HP-60®, all Cabot. It is also possible to use particles which have a partial or complete silicon dioxide shell, more particularly metal oxide particles with a silicon dioxide shell.

The purity of the silicon dioxide used in the process of the invention is preferably greater than 99% by weight and more preferably greater than 99.8% by weight. Possible impurities include aluminium oxide (≤ 0.05% by weight), titanium dioxide (≤ 0.03% by weight), iron oxide (≤ 0.003% by weight). It is possible with particular advantage to use silicon dioxide containing less than 0.05% by weight potassium oxide.

In certain circumstances it may be useful to cool the dispersion to temperatures of less than or equal to 50°C after it has left the milling chamber. The temperature that is obtained in the course of the dispersing operation is dependent on factors including the fraction of the silicon dioxide particles, the pressure, the alkaline substance, the amount, the concentration and the temperature of the alkaline substance, the temperature of the preliminary dispersion and the pH of the preliminary dispersion. Particularly with high fractions of silicon dioxide there can be a temperature of up to 100°C, which can cause gelling of the dispersion.

The pH is set preferably using amino alcohols, more preferably using 2-amino-2-methylpropanol.

The dispersion is notable for a high degree of stability towards sedimentation and gelling. Furthermore, it has a very low viscosity and is therefore easy to process.

An aqueous dispersion may be prepared, the aqueous dispersion comprising aggregated, preferably pyrogenically prepared, silicon dioxide particles having a pH of 9 to 11 and a silicon dioxide content of 25% to 35% by weight, preferably 27% to 32% by weight, based in each case on the total amount of the dispersion, wherein
- the particles
   - contain at least 99.8% by weight of SiO₂ and less than 0.05% by weight of potassium, calculated as potassium oxide,
   - have a BET surface area of 200 ± 20 m²/g, and
   - have a d₅₀ (volume-averaged) of 50 to 85 nm, and
- the dispersion has a viscosity y which is governed by y = a + n · b · x^{c}, where
   a = 0.891, b = 4.609·10⁻²⁶, c = 18.81,
   n = 0.7 to 1.3, preferably 0.8 to 1.2, more preferably 0.9 to 1.1,
   x = silicon dioxide content of dispersion in % by weight, and
   y = viscosity in mPas at 100 s⁻¹ and 23°C.

Also an aqueous dispersion may be prepared, the aqueous dispersion comprising of aggregated, preferably pyrogenically prepared, silicon dioxide particles having a pH of 9 to 11 and a silicon dioxide content of 25% to 35% by weight, preferably 27% to 32% by weight, based in each case on the total amount of the dispersion, wherein
- the particles
   - contain at least 99.8% by weight of SiO₂ and less than 0.05% by weight of potassium, calculated as potassium oxide,
   - have a BET surface area of 300 ± 30 m²/g, and
   - have a d₅₀ (volume-averaged) of 50 to 85 nm, and
- the dispersion has a viscosity y which is governed by y = a + n · b · x^{c}, where
   a = 0.891, b = 1.0252·10⁻²⁹, c = 21.69,
   n = 0.7 to 1.3, preferably 0.8 to 1.2, more preferably 0.9 to 1.1
   x = silicon dioxide content of dispersion in % by weight, and
   y = viscosity in mPas at 100 s⁻¹ and 23°C.

The pH of the dispersions can be adjusted preferably with amino alcohols, more preferably with 2-amino-2-methylpropanol.

The dispersions are notable for a high level of stability towards sedimentation and gelling. Furthermore, they have a very low viscosity and are therefore easy to process.

The dispersion obtainable by the process of the invention or of the may be used as a filler, more particularly in acrylate sealants, as a masterbatch for producing polishing dispersions, for rheology control, for emulsion stabilization, for polymer reinforcement, for surface treatment, as an anti-blocking or anti-slip agent, for promoting adhesion, as a flocculant, as a release agent in the foundry industry, as a binder for casting moulds, in silicate renders and in masonry paints.

### Examples

### Analytical determinations

Determination of dispersion viscosity: The viscosity of the dispersions produced was determined using a Physica Model 300 rotational rheometer and the CC 27 measuring cup at 25°C. The viscosity value was determined at shear rates of 10 s⁻¹ and 100 s⁻¹.

Determination of dispersion particle size: The particle size present in the dispersion is determined by means of light scattering. The instrument used is the Horiba LA 910 (Horiba Ltd., Japan). The parameter stated is the median value of the volume distribution d_{50(V).}

### Preparation of the dispersions

Preliminary dispersion 1: A 100 I stainless steel batching vessel is charged with 39.0 kg of completely ion-free water. Subsequently, using the suction hose of the Ystral Conti-TDS 3 (stator slot: 4 mm ring and 1 mm ring, rotor/stator distance approximately 1 mm), 21.0 kg of AEROSIL^{®} 200 (BET surface area 200 m²/g), Degussa, are inducted under shearing conditions. After the end of the induction, the induction port is closed and subsequent shearing takes place at 3000 rpm for 10 minutes. A pH of approximately 3.5 is established. The amount of silicon dioxide is 35% by weight. This preliminary dispersion is used in Inventive Examples 1 to 9 and in Comparative Example 12.

Preliminary dispersion 2: Preparation as for preliminary dispersion 1 but using 21 kg of AEROSIL^{®} 300 (BET surface area 300 m²/g) instead of AEROSIL^{®} 200. A pH of approximately 3.3 is established. The amount of silicon dioxide is 35% by weight. This preliminary dispersion is used in Inventive Example 10.

Preliminary dispersion 3: Preparation as for preliminary dispersion 1 but using 21 kg of AEROSIL^{®} 130 (BET surface area 130 m²/g) instead of AEROSIL^{®} 200. A pH of approximately 3.6 is established. The amount of silicon dioxide is 35% by weight. This preliminary dispersion is used in Inventive Example 11.

Example 1: Preliminary dispersion 1, under a pressure of 2000 bar, is divided into three substreams which are each depressurized via a diamond nozzle having a diameter of 0.25 µm. The three jets, which emerge at very high speed, meet at a collision point. The three jets of the preliminary dispersion are located in a common imaginary plane, with the angle to the adjacent jet being in each case 120°. A gear pump is used to supply 100 l/h of aqueous sodium hydroxide solution via an opening above the collision point, and as a result of this procedure the ground dispersion, which is still acidic, is mixed intensely within a very short time. The dispersion which runs off has a pH of 9.8. The average particle size d₅₀ is 79 nm and the viscosity is 280 Pas.

Example 2 is carried out as for Example 1 but with 80 l/h of sodium hydroxide solution.

Examples 3 to 8 are carried out as for Inventive Example 1, with the pressures and conveying rates as per Table 1, but using 2-amino-2-methylpropanol (AMP 90) instead of NaOH.

Example 9 is carried out as for Example 3, but using AEROSIL^{®} 300 instead of AEROSIL^{®} 200.

Example 10 is carried out as for Example 3,but using AEROSIL^{®} 130 instead of AEROSIL 200.

Example 11 is carried out as for Example 10, but smaller amounts of AMP 90.

In Example 12 the preliminary dispersion 1 is ground as in Example 1, but no alkaline substance is added. Spontaneous gelling occurs in the milling chamber. It is not possible to prepare a dispersion.

In Example 13 aqueous sodium hydroxide solution is added to preliminary dispersion 1 to achieve an alkaline pH. Only a gelled mass is obtained.

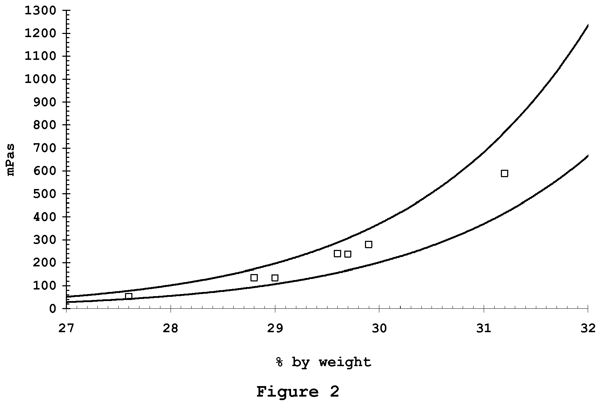

Figure 2 shows the viscosity in mPas, of the dispersions prepared with Aerosil 200 as a function of the silicon dioxide content, in % by weight, shown by □. The measurements are situated within two plots. These plots result from the formulae y = a + n·b·x^{c}, where a = 0.891, b = 1.0252·10⁻²⁹, c = 21.69, n = 0.7 or 1.3,
x = silicon dioxide content of dispersion in % by weight and
y = viscosity in mPas at 100 s⁻¹ and 23°C.

Corresponding plots can also be determined for dispersions based on a silicon dioxide having a BET surface area of 300 ± 30 m²/g. For this case the formula is y = a + n·b·x^{c}, where a = 0.891, b = 1.0252·10⁻²⁹, c = 21.69,
n = 0.7 to 1.3, x = silicon dioxide content of dispersion in % by weight, and y = viscosity in mPas at 100 s⁻¹ and 23°C.

**Table 1: Ingredients and amounts; analytical values of the dispersions**

| | **Preliminary dispersion** | | | | **Alkaline substance** | | | **Dispersion** | | | |
|---|---|---|---|---|---|---|---|---|---|---|---|
| **Example** | **SiO₂ AEROSIL^{®}** | **SiO₂ content** | **Pressure (bar)** | **pH** | | **Fraction** | **Supply rate** | **pH** | **Content SiO₂** | **d₅₀** | **Viscosity** |
| | | % by weight | | | | % by weight | l/h | | % by weight | nm | mPas |
| 1 | 200 | 35 | 2000 | 3.5 | NaOH | 3.62 | 100 | 9.8 | 29.9 | 79 | 280 |
| 2 | 200 | 35 | 2000 | 3.5 | NaOH | 3.62 | 80 | 9.3 | 31.2 | 80 | 590 |
| 3 | 200 | 35 | 2000 | 3.5 | AMP 90 | 9.45 | 100 | 9.9 | 29.6 | 76 | 240 |
| 4 | 200 | 35 | 2150 | 3.5 | AMP 90 | 9.45 | 120 | 10.3 | 26.8 | 75 | 27 |
| 5 | 200 | 35 | 1800 | 3.5 | AMP 90 | 9.45 | 80 | 10.2 | 29.0 | 76 | 135 |
| 6 | 200 | 35 | 2300 | 3.5 | AMP 90 | 9.45 | 80 | 10.0 | 29.7 | 76 | 238 |
| 7 | 200 | 35 | 2300 | 3.5 | AMP 90 | 9.45 | 100 | 10.9 | 27.6 | 75 | 54 |
| 8 | 200 | 35 | 2300 | 3.5 | AMP 90 | 9.45 | 90 | 10.7 | 28.8 | 76 | 136 |
| 9 | 300 | 35 | 2300 | 3.3 | AMP 90 | 9.45 | 80 | 10.4 | 31.2 | 82 | 2657 |
| 10 | 130 | 35 | 2300 | 3.6 | AMP 90 | 9.45 | 100 | 11.2 | 28.8 | 85 | 16 |
| 11 | 130 | 35 | 2300 | 3.6 | AMP 90 | 9.45 | 90 | 11.0 | 31.1 | 85 | 38 |
| 12 | 200 | 35 | 2300 | 3.5 | - | - | - | - | - | - | - |
| 13 | 200 | 35 | - | - | - | - | - | - | - | - | - |

## Claims

1. Process for preparing an alkaline dispersion of aggregated silicon dioxide particles by dividing a preliminary dispersion comprising 20% to 35% by weight of aggregated silicon dioxide particles having a BET surface area of 120 to 300 m²/g, within a pH of 3 to 5 into at least two streams, placing these streams under a pressure of at least 50 bar and depressurizing them to a collision point, each via one nozzle, in a grinding chamber, and admixing the dispersion that runs off at the bottom, with an alkaline substance in an amount such that the dispersion overall has a pH of more than 7, **characterized in that** the preliminary dispersion is sprayed using three nozzles disposed in one plane at an angle of 120° to one another and the alkaline substance is introduced by means of a nozzle located above the collision point while the dispersion is still in the grinding chamber.

2. Process according to Claim 1, **characterized in that** the pH of the preliminary dispersion is set by addition of acids.

3. Process according to Claims 1 or 2, **characterized in that** the alkaline substance is metered in in an amount such that the dispersion has a pH of 8 to 11.5.

4. Process according to Claims 1 to 3, **characterized in that** the alkaline substance is at least one base selected from the group encompassing the metal hydroxides of main groups I and II of the Periodic Table of the Elements, amines and amine derivatives, amino alcohols, and alkaline salts of organic and inorganic acids.

5. Process according to Claims 1 to 4, **characterized in that** the alkaline substance used is a solution.

6. Process according to Claims 1 to 5, **characterized in that** the liquid phase of the preliminary dispersion encompasses water and mixtures of water with organic solvents.

7. Process according to Claims 1 to 6, **characterized in that** the aggregated silicon dioxide particles used are pyrogenic in origin.

## Patentansprüche

1. Verfahren zur Herstellung einer alkalischen Dispersion von aggregierten Siliciumdioxidpartikeln, bei dem man eine Vordispersion umfassend 20 bis 35 Gew.-% an aggregierten Siliciumdioxidpartikeln mit einer BET-Oberfläche von 120 bis 300 m²/g mit einem pH-Wert von 3 bis 5 in mindestens zwei Ströme teilt, diese unter einen Druck von mindestens 50 bar setzt und in einer Mahlkammer über jeweils eine Düse auf einen Kollisionspunkt hin entspannt, und der nach unten ablaufenden Dispersion einen alkalisch reagierenden Stoff in einer Menge zudosiert, dass die Dispersion insgesamt einen pH-Wert von mehr als 7 aufweist, **dadurch gekennzeichnet, dass** man die Vordispersion mittels dreier Düsen, die in einer Ebene in einem Winkel von 120° zueinander angeordnet sind, verdüst und den alkalisch reagierenden Stoff mittels einer Düse, die sich oberhalb des Kollisionspunktes befindet, einbringt, während sich die Dispersion noch in der Mahlkammer befindet.

2. Verfahren nach Anspruch 1, **dadurch gekennzeichnet, dass** der pH-Wert der Vordispersion durch Zugabe von Säuren eingestellt wird.

3. Verfahren nach den Ansprüchen 1 oder 2, **dadurch gekennzeichnet, dass** der alkalisch reagierende Stoff in einer Menge eindosiert wird, dass die Dispersion einen pH-Wert von 8 bis 11,5 aufweist.

4. Verfahren nach den Ansprüchen 1 bis 3, **dadurch gekennzeichnet, dass** der alkalisch reagierende Stoff wenigstens eine Base ausgewählt aus der Gruppe umfassend die Metallhydroxide der I. und II. Hauptgruppe des Periodensystems, Amine und Aminderivate, Aminoalkohole und alkalisch reagierende Salze organischer und anorganischer Säuren, ist.

5. Verfahren nach den Ansprüchen 1 bis 4, **dadurch gekennzeichnet, dass** man als alkalisch reagierenden Stoff eine Lösung einsetzt.

6. Verfahren nach den Ansprüchen 1 bis 5, **dadurch gekennzeichnet, dass** die flüssige Phase der Vordispersion Wasser und Gemische von Wasser mit organischen Lösungsmitteln umfasst.

7. Verfahren nach den Ansprüchen 1 bis 6, **dadurch gekennzeichnet, dass** als aggregierte Siliciumdioxidpartikel solche von pyrogener Herkunft eingesetzt werden.

## Revendications

1. Procédé de préparation d'une dispersion alcaline de particules agrégées de dioxyde de silicium en divisant une dispersion préliminaire comprenant 20 % à 35 % en poids de particules agrégées de dioxyde de silicium ayant une surface spécifique BET de 120 à 300 m²/g, à un pH de 3 à 5, en au moins deux flux, en mettant ces flux sous une pression d'au moins 50 bars et en les mettant hors pression jusqu'à un point de collision, chacun par l'intermédiaire d'une buse, dans une chambre de broyage, et en mélangeant par addition la dispersion qui s'écoule au fond avec une substance alcaline dans une quantité telle que l'ensemble de la dispersion ait un pH supérieur à 7, **caractérisé en ce que**
la dispersion préliminaire est pulvérisée en utilisant trois buses disposées en un seul plan à un angle de 120 ° les unes par rapport aux autres et la substance alcaline est introduite au moyen d'une buse située au-dessus du point de collision tandis que la dispersion se trouve encore dans la chambre de broyage.

2. Procédé selon la revendication 1, **caractérisé en ce que** le pH de la dispersion préliminaire est établi par l'addition d'acides.

3. Procédé selon les revendications 1 ou 2, **caractérisé en ce que** la substance alcaline est introduite en quantité contrôlée dans une quantité telle que la dispersion ait un pH de 8 à 11,5.

4. Procédé selon les revendications 1 à 3, **caractérisé en ce que** la substance alcaline est au moins une base sélectionnée dans le groupe comprenant les hydroxydes de métaux des groupes principaux I et II de la Classification périodique des éléments, d'amines et de dérivés d'amines, d'amino-alcools et de sels alcalins d'acides organiques et inorganiques.

5. Procédé selon les revendications 1 à 4, **caractérisé en ce que** la substance alcaline utilisée est une solution.

6. Procédé selon les revendications 1 à 5, **caractérisé en ce que** la phase liquide de la dispersion préliminaire comprend de l'eau et des mélanges d'eau avec des solvants organiques.

7. Procédé selon les revendications 1 à 6, **caractérisé en ce que** les particules agrégées de dioxyde de silicium utilisées sont d'origine pyrogène.
